Europäisches Patentamt

European Patent Office

Office européen des brevets

(11) Veröffentlichungsnummer : **0 063 167**
**B1**

(12) EUROPÄISCHE PATENTSCHRIFT

(45) Veröffentlichungstag der Patentschrift :
30.07.86

(51) Int. Cl.⁴ : **A 01 B 63/108, A 01 B 59/048**

(21) Anmeldenummer : 81103031.1

(22) Anmeldetag : 22.04.81

(54) **Land- und/oder bauwirtschaftlich nutzbares Kraftfahrzeug mit frontseitiger Geräteanbauvorrichtung.**

(43) Veröffentlichungstag der Anmeldung :
27.10.82 Patentblatt 82/43

(45) Bekanntmachung des Hinweises auf die Patenterteilung : 30.07.86 Patentblatt 86/31

(84) Benannte Vertragsstaaten :
AT DE FR GB IT SE

(56) Entgegenhaltungen :
DE-A- 2 103 252
DE-A- 2 637 312
DE-A- 2 758 978
DE-A- 2 804 129
DE-A- 2 852 773
DE-U- 7 406 216
US-A- 3 616 863

(73) Patentinhaber : DEERE & COMPANY
1 John Deere Road
Moline Illinois 61265 (US)

(72) Erfinder : Weiss, Heinz, Dipl.-Ing.
Volkerstrasse 24
D-6140 Bensheim (DE)

(74) Vertreter : Feldmann, Bernhard et al
DEERE & COMPANY European Office, Patent Department Steubenstrasse 36-42 Postfach 503
D-6800 Mannheim 1 (DE)

## Beschreibung

Die Erfindung bezieht sich auf ein land- und/ oder bauwirtschaftlich nutzbares Kraftfahrzeug, insbesondere Ackerschlepper, mit frontseitiger Geräteanbauvorrichtung, die zur Höhenverstellung eines Kupplungsrahmens mittels zweier unterer und mindestens eines oberen vertikal verschwenkbaren Lenker, deren fahrzeugseitige Anlenkpunkte mittelbar am Fahrzeugrahmen gegebenenfalls mittelbar am Vorderachsbock angeordnet sind eine mit mindestens einem der Lenker verbundene Hubeinrichtung aufweist.

Die Entwicklung geht bei Kraftfahrzeugen der genannten Art in Richtung größerer, insbesondere breiterer und schwerer Anbaugeräte. Soweit diese Geräte an der Rückseite des Kraftfahrzeugs, z. B. eines Ackerschleppers, angekuppelt werden, können sie während der Transportphase auf öffentlichen Straßen im Falle von Überbreite konstruktiv so gestaltet sein, daß ein Zusammenklappen nach hinten oder auch nach oben erfolgt. Im Falle von entsprechend großen Frontanbaugeräten, wie sie zunehmend an Bedeutung gewinnen, ist diese Lösung in aller Regel nicht möglich, da entweder die Ausladung nach vorne unzulässig lang wäre oder aber das gelegentlich vorgeschlagene Wegklappen nach oben die Sicht des Fahrers in unzulässiger Weise behindern würde.

In der Praxis müssen daher überbreite Frontanbaugeräte für den Transport auf öffentlichen Straßen abgebaut werden.

So ist bereits eine Geräteanbauvorrichtung für einen Ackerschlepper bekannt (DE-A1-2 758 978), bei der das frontseitig angeschlossene Gerät abbaubar ist. Im einzelnen sind ein mittig angeordneter oberer Lenker und zwei untere Lenker geräteseitig über ein Geräteanschlußteil miteinander verbunden und fahrzeugseitig an einem am Vorderachsbock eines Ackerschleppers fest angeordneten Gußteil vor der Frontverkleidung mittelbar angelenkt. Über einen Hubzylinder, der ebenfalls am Gußteil fest angeordnet ist, werden die unteren Lenker über einen Hebel und eine Hubwelle vertikal verschwenkt. Der Gußteil, der Hubzylinder und die fahrzeugseitigen Anlenkpunkte der Lenker sind vor der Frontverkleidung des Ackerschleppers angeordnet, und der obere Lenker weist eine kürzere Länge als die unteren Lenker auf, so daß beim vertikalen Verschwenken der unteren Lenker der Geräteanschlußteil aus seiner in den Figuren dargestellten Lage kippt und eine Schrägstellung einnimmt. Dadurch wird auch das angebaute Gerät in dieselbe Schräglage beim Anheben gekippt, und kann bei einer Ablage, die höher als das Straßenniveau ist, nicht mehr oder nur mit großen Schwierigkeiten abgebaut werden, da Teile der Geräteanbauvorrichtung je nach Lage des Gerätes auf Druck oder Zug beansprucht werden. Hinzu kommt, daß die Hubhöhe des Hydraulikzylinders nur begrenzt ist.

Andererseits ist es bereits bekannt (FR-A2-2 074 720), eine Geräteanbauvorrichtung mit einer Hubeinrichtung zu versehen, bei deren Betätigung ein Geräteanschlußteil nach Anpassung des oberen Lenkers parallel verstellbar ist.

Aus der DE-A1-2 637 312 ist es bereits bekannt, einen Geräteanschlußteil vertikal zu verstellen, aber nicht zu verschwenken, wozu ein relativ hoher Frontrahmen erforderlich wird, der die Sichtverhältnisse in nicht zulässiger Weise einschränkt und den Anbau, beispielsweise von Ladeschwingen eines Frontladers, unmöglich macht oder zumindest erheblich erschwert.

Die mit der Erfindung zu lösende Aufgabe wird darin gesehen, ein Kraftfahrzeug mit frontseitig angebauter Geräteanbauvorrichtung so auszubilden, daß das angebaute Gerät über die Geräteanbauvorrichtung auf einem Transportfahrzeug abgestellt werden kann.

Diese Aufgabe ist dadurch gelöst worden, daß die fahrzeugseitigen Anlenkpunkte der unteren Lenker und des oder der oberen Lenker an zwei Hubbalken so angebracht sind, daß diese Anlenkpunkte unter Einwirkung der an den Lenkern angreifenden im Bereich des Hubbalkens befindlichen Hubeinrichtung parallel zueinander höhenverstellbar ausgebildet sind.

Hierdurch wird zunächst die normale Hubhöhe der Geräteanbauvorrichtung ausgenutzt und dann noch zusätzlich die Geräteanbauvorrichtung in der maximalen Schwenkstellung nach oben verschoben, um die Ladehöhe des Transportwagens zu erreichen. Die gesamte Vorrichtung läßt sich auf relativ kleinem Raum unterbringen, so daß das Sichtfeld des Kraftfahrzeugfahrers nicht zusätzlich eingeengt wird.

Da die erfindungsgemäße Anordnung sich auf relativ kleinem Raum unterbringen läßt, ist nach der Erfindung weiter vorgesehen, daß die Hubeinrichtung gegebenenfalls mit den fahrzeugseitigen Anlenkpunkten der unteren Lenker und des oder der oberen Lenker unter der Frontverkleidung vorgesehen sind.

Weitere erfindungsgemäße Merkmale sind Gegenstand der übrigen Unteransprüche.

In der Zeichnung ist ein nachfolgend näher erläutertes Ausführungsbeispiel der Erfindung dargestellt. Es zeigt :

Figur 1 eine schematische Darstellung der Geräteanbauvorrichtung in Mittenstellung,

Figur 2 eine ähnliche Darstellung wie in Fig. 1, jedoch die Geräteanbauvorrichtung in ihrer abgesenkten Position zeigend,

Figur 3 die Geräteanbauvorrichtung in ihrer oberen Position bei noch nicht ausgefahrenen Hubbalken,

Figur 4 die Geräteanbauvorrichtung mit ausgefahrenen Hubbalken,

Figur 5 die Geräteanbauvorrichtung in der Draufsicht und

Figur 6 die Geräteanbauvorrichtung in perspektivischer Darstellung.

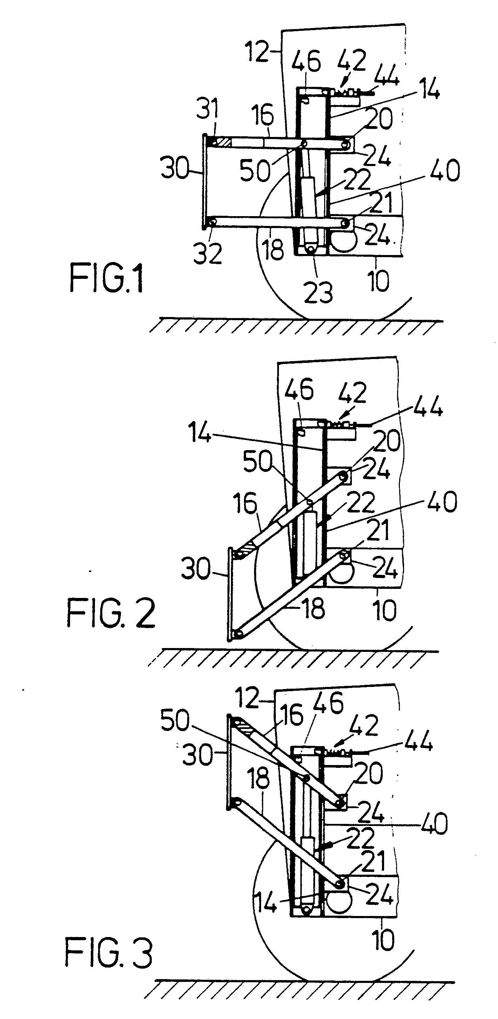

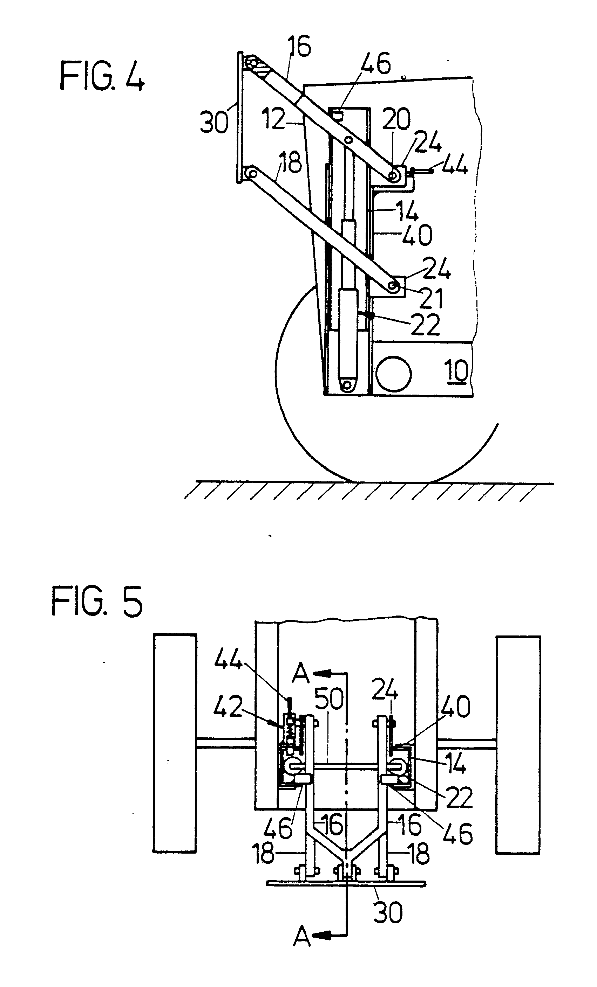

Die Figuren 1 bis 4 zeigen eine Geräteanbauvorrichtung gemäß der Schnittebene A-A, wie sie in Fig. 5 eingezeichnet ist.

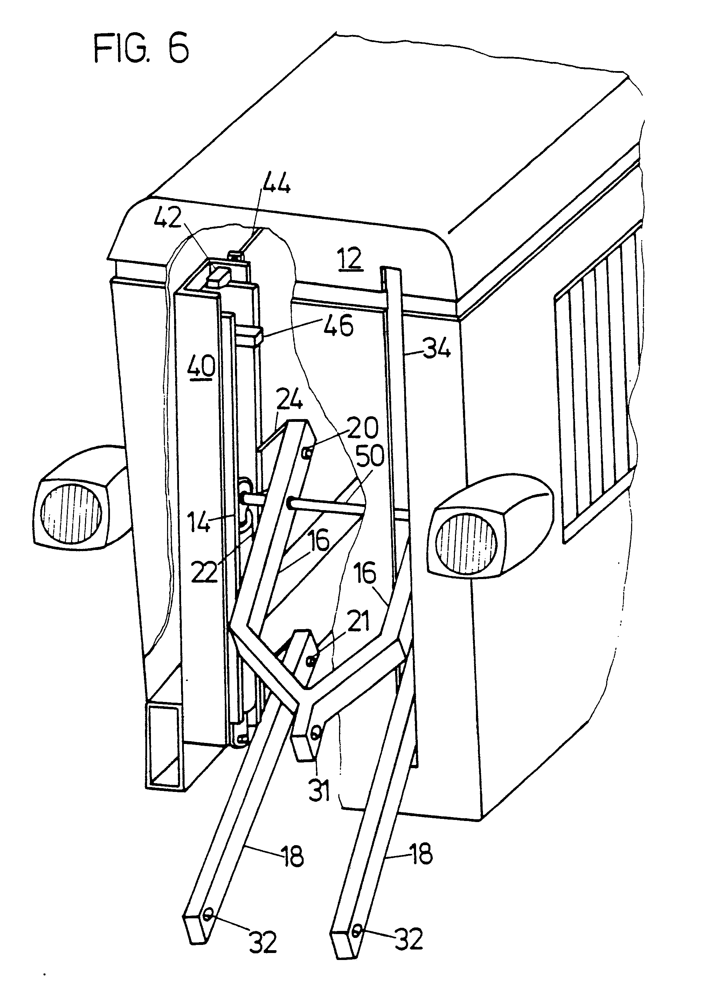

An einem Fahrzeugrahmen 10 ist eine nicht näher bezeichnete Vorderradachse aufgehängt und eine Front- bzw. Motorverkleidung ist mit 12 bezeichnet. Ein Hubbalken 14 hat vorzugsweise, wie es aus den Figuren 5 und 6 ersichtlich ist, die Form eines U-Profils. Es dient zur Aufnahme einer Hubeinrichtung 22, die ein zweistufiger Hubzylinder sein kann. Anstelle eines hydraulisch beaufschlagbaren Hubzylinders sind grundsätzlich auch andere Einrichtungen denkbar, wie z. B. Schneckenwelle und Zahnstange. Bevorzugt werden jedoch zumeist Hydraulikzylinder.

Der Hubzylinder der Hubeinrichtung 22 ist an seiner unteren Anschlußstelle 23 schwenkbeweglich befestigt und mit seinem oberen Ende drehbeweglich mit einem rechten und linken oberen Lenker 16 verbunden. Da beim Verschwenken der Lenker die Hubeinrichtung ebenfalls eine geringe Verschwenkung vollzieht, empfiehlt es sich, bei der Verwendung von Hydraulikzylindern diese so einzubauen, daß die weniger Raum beanspruchende Kolbenstange nach oben weist und mit dem oberen Lenker 16 verbunden ist. Die oberen und zwei untere Lenker 16 und 18 sind schwenkbeweglich mittels Anlenkpunkte 20, 21 an am Hubbalken 14 befestigten nach rückwärts zu einer nicht dargestellten Fahrkabine weisenden Laschen angeschlossen. Wie aus Fig. 5 ersichtlich ist, können die Laschen am offenen Ende des jeweils fahrkabinenseitigen Profilschenkels der Hubbalken 14 angeschweißt werden, und die beiden U-Profile zueinanderweisen, so daß die oberen und unteren Lenker 16, 18 zwischen den Hubbalken liegen. Dabei sind die linke und rechte Hubeinrichtung 22 an ihren oberen Enden mit einer waagerecht verlaufenden Querstange 50 miteinander verbunden, auf der sich die beiden oberen Lenker 16 drehbeweglich abstützen. Aus den Seitenansichten wird der Abstand ersichtlich, in dem sich die obere und untere Lasche für den jeweiligen oberen und unteren Lenker 16 und 18 befinden. Die unteren Lenker 18 sind bei der gezeigten Ausführungsform nicht mit der Hubeinrichtung 22 verbunden, sondern werden parallel mit den oberen Lenkern 16 durch einen Geräteanschlußteil oder Kupplungsrahmen 30 mitgenommen. Dieser ist an Anschlußpunkten 31 und 32 mit den oberen und unteren Lenkern 16, 18 verbunden. Die oberen Lenker 16 können, wie es aus den Figuren 5 und 6 ersichtlich ist, vorne mittig in einem einzigen Anschlußpunkt 31 zusammenlaufen.

Wie ferner aus der Zeichnung hervorgeht, sind der rechte und linke Hubbalken 14 innerhalb einer rechten und linken Führungsschiene 40 verschiebbar und bei etwa halb ausgefahrener Kolbenstange der Hubzylinder der Hubeinrichtungen 22 befinden sich die Lenker 16 und 18 in etwa waagrechter Stellung wie es in Fig. 1 dargestellt ist. Im Falle der Fig. 2 wird durch Einfahren der Hydraulikkolben die untere Stellung erreicht. In Fig. 3 ist die entsprechende Position der Lenker 16, 18 bei voll ausgefahrener erster Stufe der Hubzylinder gezeigt. Dabei erreichen die oberen Lenker 16 Anschläge 46. Bisher waren die Hubbalken 14 mittels mindestens einer Sperrvorrichtung 42 gegen eine vertikale Bewegung nach oben unter der Einwirkung der Hubzylinder, deren Druckkomponente sich über den Kraftarm auf die Laschen 24 und damit auf die Hubbalken 14 selbst fortsetzt, verriegelt. Im Falle der Verwendung einer Querstange 50 genügt eine einzige Sperrvorrichtung an einem der beiden Hubbalken. Es ist jedoch auch eine beidseitige Anbringung denkbar. Wird nun der Anschlag 46 vom Lenker 16 erreicht, so ist die Sperrvorrichtung lösbar. Dies kann durch eine entsprechende mechanische Verbindung von Anschlag und Sperrvorrichtung erreicht werden oder z. B. durch optische Anzeige in der Fahrerkabine, wonach der Fahrer nunmehr die Hubzylinder in die zweite Stufe ausfahren kann.

Die Sperrvorrichtung 42 kann z. B. eine Sperrklinke sein, die sich unter Federdruck von außen in das U-Profil direkt oberhalb des in Normalposition befindlichen Hubbalkens 14 einschiebt. Sie wird nun gelöst, z. B. dadurch, daß der Fahrer mittels Bowdenzug 44 die Sperrklinke aus dem Bereich des U-Profils herauszieht. Werden dann die Hubzylinder weiter betätigt, so fährt eine zweite Stufe aus, wobei sich an der Stellung der oberen und unteren Lenker 16, 18 relativ zu den Hubbalken 14 nichts verändert. Vielmehr wird die ganze Einheit vertikal in der linken und rechten Führungsschiene 40 nach oben geschoben, wobei Fig. 4 die maximal ausgefahrene Position darstellt. Beim Ausfahren in diese Position ist der Anschlag 46 von Bedeutung, da anderenfalls ein unerwünschtes Verschwenken der Lenker 16, 18 nach oben und zum Fahrzeug hin eintreten könnte.

Will man nun das Gerät bzw. die Geräteanbauvorrichtung wiederum nach unten fahren, so schieben sich Lenker 16, 18 und Hubbalken 14 zunächst wieder nach unten in die in Fig. 3 gezeigte Position. Beim Passieren des oder der Anschläge 46 rasten die Klinken unter Federdruck durch die Führungsschienen 40 von selber ein. In dieser Position stehen dann die Hubbalken 14 unten in den Führungsschienen 40 bzw. in einer Quertraverse des Hub- bzw. Fahrzeugrahmens auf.

Fig. 5 zeigt eine Draufsicht auf die vorstehend erläuterte Ausführungsform, wobei die obere Haubenabdeckung entfernt ist. Die in der Draufsicht dargestellte Position entspricht etwa der in Fig. 1 gezeigten. Wie ersichtlich, ist die Sperrklinke oberhalb des oberen Randes des Trägers 14 eingerastet. In dieser Fig. ist insbesondere auch die Befestigung der Lenker 16 an den mit den U-Profilen der Hubbalken 14 verschweißten Laschen 24 mittels Rundbolzen ersichtlich, sowie die Verbindung der Hubzylinder durch die Querstange 50. Weiterhin ist die Anlenkung des Geräteanschlußteils 30 an die beiden unteren Lenker 18 und den vorne in einen Anlenkungspunkt zusammenlaufenden oberen Lenker 16 erkennbar. Als Kupplungsrahmen 30 kann ein Weiste-Dreieck dienen (vgl. die angezogene DE-A1-27 58 978) oder ein anderst geformter Rahmen. Auch eine Platte ist denkbar, in die die verschiedenen Kupplungsfunktionen, gegebenenfalls einschließlich elektrischer und hydraulischer Funktionen integriert sind.

Fig. 6 zeigt schließlich eine perspektivische Frontansicht ohne Kupplungsrahmen 30. Die Fahrzeugverkleidung ist stark schematisch dargestellt und im linken Frontbereich fortgelassen, um einen Durchblick auf den linken Teil der Geräteanbaueinrichtung zu zeigen. Aus dem rechten Frontteil wird deutlich, daß sich wesentliche Teile der Geräteanbauvorrichtung, einschließlich Hubeinrichtungen 22 und Hubbalken 14 innerhalb der Frontverkleidung 12 befinden und daß die oberen und unteren Lenker 16, 18 durch Schlitz 34 in der Frontverkleidung 12 nach außen hindurchgeführt sind.

Da die oberen und unteren Lenker 16, 18 und die Hubeinrichtungen 22 mit Schnellverschlüssen an ihren Anlenkpunkten 20, 21 bzw. ihren Anschlußstellen 23 angelenkt sind, können die außenliegenden Teile der Geräteanbauvorrichtung leicht abgebaut werden, falls sie nicht benötigt werden. Andersartige landwirtschaftliche Arbeiten werden durch die Geräteanbauvorrichtung somit nicht beeinträchtigt.

Es wird auf die Teil-Anmeldung EP-A-133 637 hingewiesen, in der der kennzeichnende Teil des Anspruchs 1 die Plazierung der Achse (21) für die unteren Lenker (18) betrifft.

**Patentansprüche**

1. Land- und/oder bauwirtschaftlich nutzbares Kraftfahrzeug, insbesondere Ackerschlepper, mit frontseitiger Geräteanbauvorrichtung, die zur Höhenverstellung eines Kupplungsrahmens (30) mittels zweier unterer und mindestens eines oberen vertikal verschwenkbaren Lenkers (18, 16), deren fahrzeugseitige Anlenkpunkte (20, 21) mittelbar am Fahrzeugrahmen (10), gegebenenfalls mittelbar am Vorderachsbock angeordnet sind, eine mit mindestens einem der Lenker (18, 16) verbundene Hubeinrichtung (22) aufweist, dadurch gekennzeichnet, daß die fahrzeugseitigen Anlenkpunkte (20, 21) der unteren Lenker (18) und des oder der oberen Lenker (16) an zwei Hubbalken (14) so angebracht sind, daß diese Anlenkpunkte (20, 21) unter Einwirkung der an den Lenker (16, 18) angreifenden im Bereich des Hubbalkens (14) befindlichen Hubeinrichtung (22) parallel zueinander höhenverstellbar ausgebildet sind.

2. Kraftfahrzeug nach Anspruch 1, dadurch gekennzeichnet, daß die Hubeinrichtung (22) gegebenenfalls mit den fahrzeugseitigen Anlenkpunkten (20, 21) der unteren Lenker (18) und des oder der oberen Lenker (16) unter der Frontverkleidung (12) vorgesehen sind.

3. Kraftfahrzeug nach Anspruch 1 oder 2, dadurch gekennzeichnet, daß die Hubeinrichtung (22) anderenends an dem oder den oberen Lenkern (16) angreifen.

4. Kraftfahrzeug nach einem oder mehreren der vorherigen Ansprüche, dadurch gekennzeichnet, daß die rahmenseitige Anschlußstelle (23) der Hubeinrichtung (22) eine Schwenkung der Hubeinrichtung (22) zuläßt und der lenkerseitige Anschluß eine drehbar in der Hubeinrichtung (22) bzw. in dem oder den Lenkern (16, 18) gelagerte Querstange (50) aufweist, wobei die fahrzeugseitigen Anlenkpunkte (20, 21) der Lenker (16, 18) mit Bezug auf den Kupplungsrahmen (30) hinter der Querstange (50) gegebenenfalls bis in eine Vertikalebene über der Vorderachse angeordnet sind.

5. Kraftfahrzeug nach einem oder mehreren der vorherigen Ansprüche, dadurch gekennzeichnet, daß bei zwei oberen Lenkern (16) diese in derselben Vertikalebene wie die zugehörigen unteren Lenker (18) angeordnet und jeweils durch Schlitze (34) in der Frontverkleidung (12) geführt sind.

6. Kraftfahrzeug nach einem oder mehreren der vorherigen Ansprüche, dadurch gekennzeichnet, daß für jeden unteren Lenker (18) ein gesonderter Hubbalken (14) vorgesehen ist, wobei die Hubbalken höhenbeweglich geführt und zum vertikalen Verschwenken eines oder aller Lenker (16, 18) feststellbar sind und mindestens ein Hubbalken einen in der maximalen Schwenkstellung gegen mindestens einen der Lenker zur Anlage bringbaren Anschlag (46) aufweist.

7. Kraftfahrzeug nach einem oder mehreren der vorherigen Ansprüche, dadurch gekennzeichnet, daß bei zwei oberen Lenkern (16) die Querstange (50) der Hubeinrichtung (22) die beiden oberen Lenker (16) miteinander verbindet und in diesen drehbar gelagert ist.

8. Kraftfahrzeug nach einem oder mehreren der vorherigen Ansprüche, dadurch gekennzeichnet, daß die Hubbalken (14) als im Querschnitt U-Profilförmige Hubrahmen ausgebildet sind, deren offene Seiten einander zugekehrt sind, jeweils eine Hubeinrichtung (22) in sich aufnehmen, an ihren mit Bezug auf die Hubeinrichtung rückwärtigen Schenkeln sich nach rückwärts erstreckende Laschen (24) zur Aufnahme der fahrzeugseitigen Anlenkpunkte (20, 21) der Lenker (16, 18) aufweisen, in am Fahrzeugrahmen (10) bzw. am Vorderachsbock fest angeordneten Führungsschienen (40) vertikal verschiebbar sind und von denen mindestens einer in der Führungsschiene (40) gegen Vertikalverschiebung über eine Sperrvorrichtung (42) arretierbar ist und mindestens einer an seinem mit Bezug auf die Hubeinrichtung vorderen Schenkel an seinem oberen Ende den Anschlag (46) aufweist.

**Claims**

1. Motor vehicle usable in agriculture and/or the building industry, in particular a farm tractor, with an implement mounting arrangement at the front which has a lifting device (22) for vertical adjustment of a coupling frame (30) by means of two lower and at least one upper vertically swingable links (18, 16) whose points of articulation (20, 21) at the end where the vehicle is located are arranged directly on the vehicle frame (10), if necessary directly on the front axle support, the lifting device being connected to at least one of the links (18, 16), characterised in that the points of articulation (20, 21) of the lower links (18) and of the upper link or links (16) at the end where the vehicle is located are so arranged on two lifting beams (14) that these points of articulation (20, 21) are vertically adjustable parallel to one another under the action of the lifting device (22) acting on the links (16, 18) and disposed in the region of the lifting beam (14).

2. Motor vehicle according to claim 1, characterised in that the lifting device (22), if necessary with the points of articulation (20, 21) of the lower links (18) and of the upper link or links (16) at the end where the vehicle is located, are provided under the front covering (12).

3. Motor vehicle according to claim 1 or 2, characterised in that the lifting device (22) acts on the upper link or links (16) at the other end.

4. Motor vehicle according to one or more of the preceding claims, characterised in that the point of connection (23) of the lifting device (22) at the end where the frame is located allows a pivoting action of the lifting device (22) and the connection at the end where the link is located has a cross bar (50) mounted rotatably in the lifting device (22) and/or in the link or links (16, 18), the points of articulation (20, 21) of the links (16, 18) at the end where the vehicle is located being arranged behind the cross bar (50) with respect to the coupling frame (30), if necessary as far as in a vertical plane above the front axle.

5. Motor vehicle according to one or more of the preceding claims, characterised in that in the case of two upper links (16) they are arranged in the same vertical planes as the associated lower links (18) and are each passed through slots (34) in the front covering (12).

6. Motor vehicle according to one or more of the preceding claims, characterised in that a separate lifting beam (14) is provided for each lower link (18), the lifting beams being guided to be movable vertically and being fixable in position for vertical swinging of one or all of the links (16, 18) and at least one lifting beam having a stop (46) which can be brought into abutment against at least one of the links in the position of maximum swing.

7. Motor vehicle according to one or more of the preceding claims, characterised in that in the case of two upper links (16) the cross bar (50) of the lifting device (22) interconnects the two upper links (16) and is rotatably mounted in them.

8. Motor vehicle according to one or more of the preceding claims, characterised in that the lifting beams (14) are in the form of lifting frames which are channel-section-shaped in cross-section, whose open sides face one another, which each accommodate a lifting device (22), have on their sides at the rear with respect to the lifting device, rearwardly extending lugs (24) for receiving the points of articulation (20, 21) of the links (16, 18) at the end where the vehicle is located, are vertically slidable in guide rails (40) fixedly arranged on the vehicle frame (10) or on the front axle support, and at least one of which is lockable in the guide rail (40) against vertical shifting by means of a locking device (42) and at least one of which has the stop (46) at its upper end on its side at the front with respect to the lifting device.

## Revendications

1. Véhicule utilisable en agriculture et/ou pour les travaux publics, en particulier tracteur agricole, équipé d'un dispositif porte-outil frontal qui comporte, pour le déplacement en hauteur d'un bâti d'accouplement (30) au moyen de deux barres ou biellettes inférieures et d'au moins une barre ou biellette supérieure (18, 16) pouvant pivoter verticalement, dont les points d'articulation du côté du véhicule (20, 21) sont disposés de façon indirecte sur le châssis (10) du véhicule, le cas échéant de façon indirecte sur le carter d'essieu avant, au moins un dispositif de relevage (22) relié aux barres (18, 16), caractérisé en ce que les points d'articulation (20, 21) situés du côté du véhicule pour les barres inférieures (18) et la ou les barres supérieures sont prévues sur deux poutres de relevage (14) de telle sorte que ces points d'articulation (20, 21) soient agencés de façon à être déplaçables en hauteur parallèlement l'un à l'autre sous l'influence du dispositif de relevage (22) attaquant les barres (16, 18) et disposé au voisinage de la poutre de relevage (14).

2. Véhicule suivant la revendication 1, caractérisé en ce que le dispositif de relevage (22), et le cas échéant les points d'articulation situés du côté du véhicule (20, 21) des barres inférieures et de la barre ou des barres supérieures (18), sont prévus sous le capotage avant.

3. Véhicule suivant la revendication 1 ou 2, caractérisé en ce que le dispositif de relevage (22) attaque par son autre extrémité la barre ou les barres supérieures (16).

4. Véhicule suivant une ou plusieurs des revendications précédentes, caractérisé en ce que les points de raccordement situés du côté du châssis (23) du dispositif de relevage (22) permettent un pivotement du dispositif de relevage (22) et en ce que le raccordement prévu du côté des barres comporte une traverse (50) montée de façon rotative dans le dispositif de relevage (22) ou dans la barre ou les barres (16, 18), les points d'articulation situés du côté du véhicule (20, 21) des barres (16, 18) étant disposés par rapport au bâti d'accouplement (30) derrière la traverse (50), le cas échéant jusque dans un plan vertical au-dessus de l'essieu avant.

5. Véhicule suivant une ou plusieurs des revendications précédentes, caractérisé en ce que dans le cas de deux barres supérieures (16), celles-ci sont disposées dans le même plan vertical que les barres inférieures conjuguées (18) et sont chaque fois guidées à travers des fentes (34) prévues dans le capotage avant (12).

6. Véhicule suivant une ou plusieurs des revendications précédentes, caractérisé en ce qu'il est prévu, pour chaque barre inférieure (18) une poutre de relevage particulière (14), les poutres de relevage étant guidées de façon à être déplaçables en hauteur et pouvant être immobilisées pour le pivotement vertical d'une barre ou de toutes les barres (16, 18), au moins une poutre de relevage comportant une butée (46) pouvant être amenée dans une condition d'application contre l'une au moins des barres dans la position de pivotement maximal.

7. Véhicule suivant une ou plusieurs des revendications précédentes, caractérisé en ce que, dans le cas de deux barres supérieures (16), la traverse (50) du dispositif de relevage (22) relie ensemble les deux barres supérieures (16) et est montée de façon rotative dans celles-ci.

8. Véhicule suivant une ou plusieurs des revendications précédentes, caractérisé en ce que les poutres de relevage (14) se présentent sous la forme de bâtis de relevage ayant en section droite la forme de profilés en U, dont les côtés ouverts sont orientés l'un vers l'autre, reçoivent chaque fois un dispositif de relevage (22), présentent sur leurs ailes arrière par rapport au dispositif de relevage des pattes (24) s'étendant vers l'arrière pour la réception des points d'articulation orientés vers le véhicule (20, 21) des barres (16, 18), peuvent coulisser verticalement dans des rails de guidage (40) disposés à poste fixe sur le châssis (10) du véhicule ou sur le carter d'essieu avant, l'une au moins pouvant être immobilisée dans le rail de guidage (40) d'une manière empêchant un coulissement vertical par l'intermédiaire d'un dispositif de verrouillage (42), et l'une au moins comportant sur son aile avant par rapport au dispositif de relevage la butée (46), qui est prévue à son extrémité supérieure.

FIG.1

FIG. 2

FIG. 3

1

FIG. 4

FIG. 5

# FIG. 6